# EUROPÄISCHE PATENTANMELDUNG

(11) **EP 1 463 168 A2**
(43) Veröffentlichungstag der Anmeldung: **29.09.2004**
(21) Anmeldenummer: 04006308.3
(22) Anmeldetag: 17.03.2004
(51) Int. Cl.: H02B 1/30

(54) **"Zähler-und/oder Verteilerschrank"**

(30) Priorität: 24.03.2003 DE 20304953 U; 24.03.2003 DE 20304954 U; 24.03.2003 DE 20304955 U; 09.05.2003 DE 10321586
(71) Anmelder: Hager Electro GmbH, 66131 Saarbrücken (DE)
(72) Erfinder: Hein, Peter, D-66386 St. Ingbert (DE); Hinschberger, Peter, D-66131 Saarbrücken (DE)
(74) Vertreter: Bernhardt, Reinold, Dr. Dipl.Phys.

(57) **Zusammenfassung**

Die Erfindung betrifft einen Zähler- und/oder Verteilerschrank. Erfindungsgemäß weist der Schrank Wandaussparungen (6) an zur Rückwand senkrechten Schrankecken auf, welche durch Einsatzstücke (7) ausgefüllt sind. Die Einsatzstücke (7) können, versehen mit einer Einsenkung (8), einen Griff bilden, Einrichtungen zur Verbindung mit Schrankteilen oder am Schrank außen angebrachten Teilen aufweisen oder nur als Kantenschutz genutzt werden.

## Beschreibung

Die Erfindung betrifft einen Zähler- und/oder Verteilerschrank, wie er z.B. in Ein- und Mehrfamilienhäusern zum Einsatz kommt.

Bei solchen, durch Benutzung bekannten Zähler- und Verteilerschränken handelt es sich meist um Konstruktionen aus lackiertem Blech, wobei die Wandinnenseiten durch isolierendes Material ausgekleidet sind. Die an einer Wand aufgehängten Zähler- und Verteilerschränke schützen die Zähler- und Verteileranlage eines Hauses einerseits vor äußeren Einflüssen, z.B. Verschmutzung und schirmen andererseits Netzspannung führende Leiter nach außen ab.

Der vorliegenden Erfindung liegt die Aufgabe zugrunde, diesen bekannten Zählerund Verteilerschrank baulich zu verändern, so dass sich neue Möglichkeiten zur konstruktiven Erweiterung des Schranks ergeben.

Der diese Aufgabe lösende Zähler- und Verteilerschrank nach der Erfindung weist Wandaussparungen an zur Rückwand senkrechten Schrankecken und die Wandaussparungen ausfüllende Einsatzstücke auf.

Vorteilhaft können solche Einsatzstücke Einrichtungen für die Verbindung mit einem Bauteil des Schrankes und/oder einem am Schrank außen anzubringenden Teil aufweisen. An solchen Einsatzstücken ließe sich z.B. ein an der Schrankvorderseite angebrachter Blendrahmen befestigen, oder die Einsatzstücke können der Befestigung einer Schranktür dienen. Als am Schrank außen anzubringende Teile kommen z.B. Kanäle für die Verlegung von Kabeln an der Schrankaußenseite in Betracht. Bei den Verbindungseinrichtungen handelt es sich vorzugsweise um Einsenkungen, die ein Steckverbindungsstück aufnehmen können. Die Einsatzstücke lassen sich aber auch zur Verbindung mehrerer Schränke miteinander oder zur Verbindung eines Schranks mit einem Sockel nutzen, oder es könnten Verbindungselemente zur Wandbefestigung des Schranks damit verbunden sein. Schließlich lässt sich ein solches Einsatzstück als Griff nutzen, indem es z.B. mit einer Einsenkung versehen wird. Im einfachsten Fall dient das Einsatzstück nur als Kantenschutz.

Zweckmäßig erstrecken sich die Wandaussparungen nur über einen Teil der Eckenlänge, so dass der Schrankkorpus durch die Aussparung nicht wesentlich geschwächt wird.

Vorzugsweise bestehen die Einsatzstücke aus Kunststoff, während es sich bei dem Schrank um eine Blechkonstruktion mit Abkantungen an den Wandecken handeln kann.

Während es denkbar ist, die Aussparungen nahe den Eckenkanten jeweils nur in einer Schrankseitenwand zu bilden, erstrecken sich in der bevorzugten Ausführungsform der Erfindung die Aussparungen von der Eckenkante in beide der zueinander senkrecht stehenden Wandteile hinein.

In der Außenkontur weist das Einsatzstück zweckmäßig die Form eines länglichen Quaders auf, dessen Längsachse parallel zur Eckenkante angeordnet ist. Die Einsatzstücke können zur Schrankaußenoberfläche bündig sein oder/und über die Schrankwandaußenfläche hinaus vorstehen, letzteres insbesondere zum Zwecke des Kantenschutzes.

Die Erfindung soll nun anhand von Ausführungsbeispielen und der beiliegenden, sich auf diese Ausführungsbeispiele beziehenden Zeichnungen näher erläutert werden. Es zeigen:
- Fig. 1: eine perspektivische Teilansicht eines Zähler- und Verteilerschranks gemäß einem ersten Ausführungsbeispiel nach der vorliegenden Erfindung,
- Fig. 2: eine Detailansicht des Schranks von Fig. 1,
- Fig. 3: ein in dem Schrank von Fig. 1 und 2 verwendetes Einsatzstück,
- Fig. 4: eine perspektivische Teilansicht eines Zähler- und Verteilerschranks gemäß einem zweiten Ausführungsbeispiel nach der vorliegenden Erfindung,
- Fig. 5: eine Ausstattungsvariante des Zähler- und Verteilerschranks von Fig. 4,
- Fig. 6: den Zähler- und Verteilerschrank von Fig. 4 mit einer dafür vorgesehenen Verpackung, und
- Fig. 7: eine perspektivische Teilansicht eines Zähler- und Verteilerschranks gemäß einem dritten Ausführungsbeispiel nach der vorliegenden Erfindung.

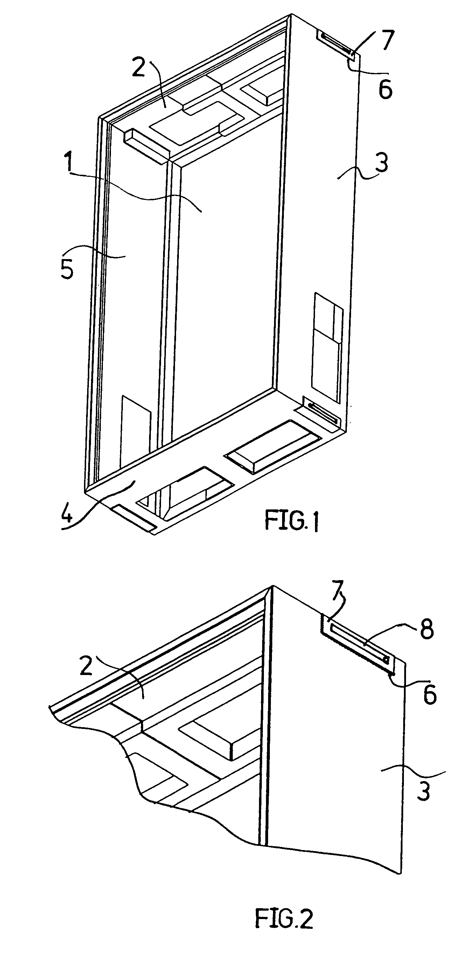

Ein in Fig. 1 und 2 gezeigter Zähler- und Verteilerschrank weist eine Rückwand 1 und dazu senkrechte Korpuswände 2 bis 5 auf. Eine die Vorderwand bildende Tür ist nicht gezeigt.

An allen vier Schrankecken ist jeweils eine Aussparung 6 gebildet, die sich von der zur Rückwand senkrechten Eckenkanten des Schrankes in beide der senkrecht aneinandergrenzenden Korpuswände hinein und über einen Teil der Länge der Eckenkante erstreckt.

In diese Aussparungen 6 ist jeweils ein Einsatzstück 7 eingesetzt, welches die Aussparung 6 bündig zur Außenoberfläche der zueinander senkrechten Korpuswände ausfüllt. Das im wesentlichen die Form eines länglichen Quaders aufweisende Einsatzstück 7 besteht aus Kunststoff, während die Schrankwände in dem betreffenden Ausführungsbeispiel aus lackiertem, an den Schrankecken abgekantetem Blech gebildet sind.

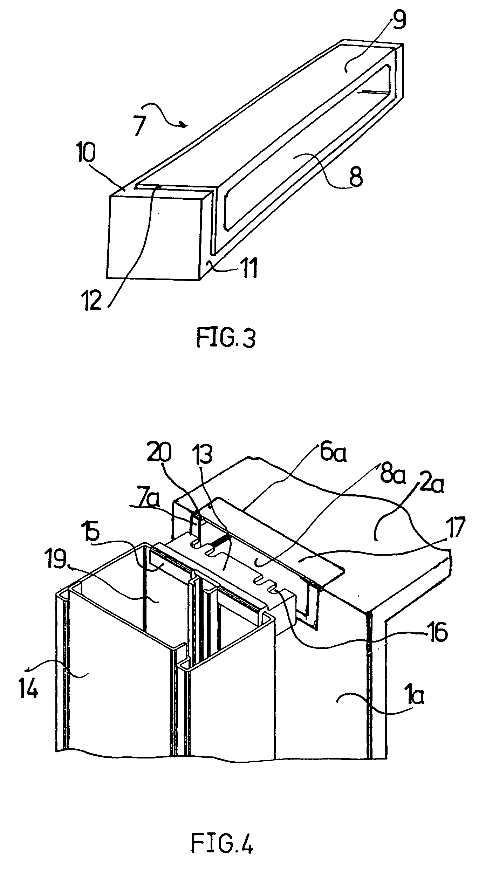

Das in Fig. 3 gesondert dargestellte Einsatzstück 7 weist eine Einsenkung 8 auf, durch welche ein Haltegriff gebildet ist, welcher den Transport und die Handhabung des Schranks erleichtert.

An dem quaderförmigen Einsatzstück 7 ist ferner ein Vorsprung 9 vorgesehen, der sich auf zwei zueinander senkrechten Quaderseiten erstreckt. Durch den Vorsprung ist eine Stufe 12 gebildet, deren Höhe gleich der Dicke des die Korpuswände bildenden Bleches ist. Über die tieferliegenden Restflächen 10 und 11 der Quaderseiten lässt sich das Einsatzstück 7 auf der Schrankinnenseite mit den Korpuswänden verkleben. Für die Verbindung des Einsatzstücks mit den Korpuswandteilen kommen ferner Schraub- oder Nietverbindungen in Betracht.

Die Einsatzstücke 7 könnten abweichend von dem vorangehend beschriebenen Ausführungsbeispiel von der Außenoberfläche der Korpuswände vorstehen, so dass sie einen Kantenschutz bilden. Ferner könnten die Einsatzstücke länger und an die Länge der Eckenkante angenähert sein. Auch bestände die Möglichkeit, die Einsatzstücke mit einem Ende bis zur Schrankvorderseite oder Schrankrückseite zu führen.

Fig. 4 lässt weitere Funktionen erkennen, welche ein solches Einsatzstück in einer Schrankecke übernehmen kann. Ein Einsatzstück 7a, das eine Aussparung 6a in Korpuswänden 1 a und 2a ausfüllt, weist eine Einsenkung 8a auf, die in dem betreffenden Ausführungsbeispiel zur Herstellung einer Steckverbindung dient. Über ein in die Einsenkung 8a einführbares, blockartiges Verbindungsstück 13 lässt sich an dem Zähler- und Verteilerschrank außen ein Kabelkanal 14 anbringen. Das Verbindungsstück 13 ist mit zwei Krallen 15 versehen, welche eine Bodenwand 19 des Kabelkanals 14 an einem Endrand hintergreifen. Der Kabelkanal 14 kann am unteren Ende des Schranks in der gleichen Weise angebracht sein, wie sie in Fig. 4 gezeigt ist.

Über ein Verbindungsstück mit zwei Steckerenden ließen sich zwei Zähler- und Verteilerschränke miteinander verbinden.

In dem hohlen, durch innere Stege versteiften Verbindungsstück sind insgesamt vier Randausnehmungen 16 gebildet, in welche beim Einschieben des Verbindungsstücks 13 in die Einsenkung 8a von einem Wandteil 17 der Einsenkung nach innen vorstehende Nasen eingreifen. Die Randausnehmungen 16 können hinterschnitten ausgebildet sein, so dass die Nasen darin einrasten.

Der Wandteil 17 weist am Rand eine zusätzliche Ausnehmung 20 auf, in welcher ein Teil der Krallen 15 Platz hat, so dass die durch die Krallen umgriffene Bodenwand 19 des Kabelkanals 14 gegen die Seitenwand 1 a des Zähler- und Verteilerschranks anliegen kann.

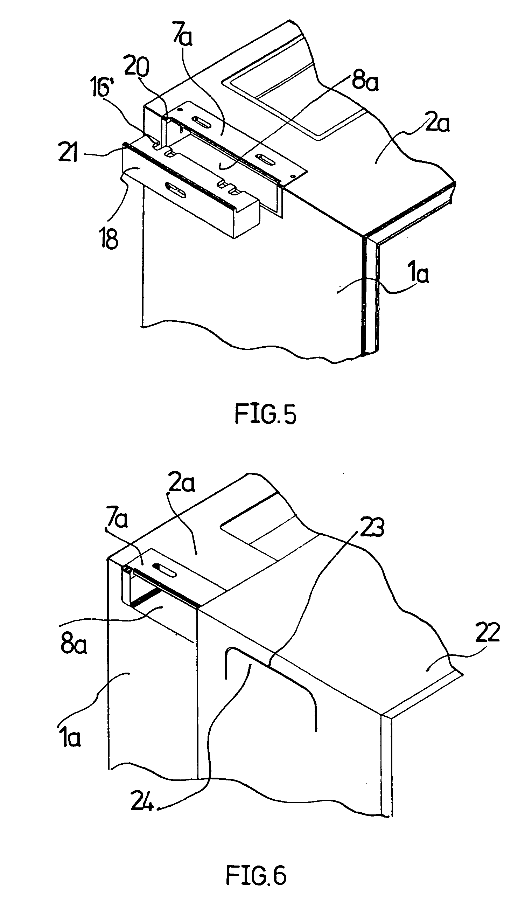

Wenn die Einsenkung 8a nicht zur Herstellung einer Steckverbindung mit am Schrank außen angebrachten Teilen verwendet wird, lässt sich in die Einsenkung 8a ein in Fig. 5 gezeigtes Füllstück 18 einsetzen, welches bis auf die Krallen 16 in gleicher Weise wie das Verbindungsstück 13 ausgebildet ist und entsprechende Randausnehmungen 16' aufweist. Entsprechend kann das Füllstück 18 wie das Verbindungsstück 13 in der Einsenkung 8a einrasten. Ein vorstehender Steg 21 füllt die Randausnehmung 20 an dem Wandteil 17 aus und ist bündig zur Außenoberfläche der Korpuswand 2a.

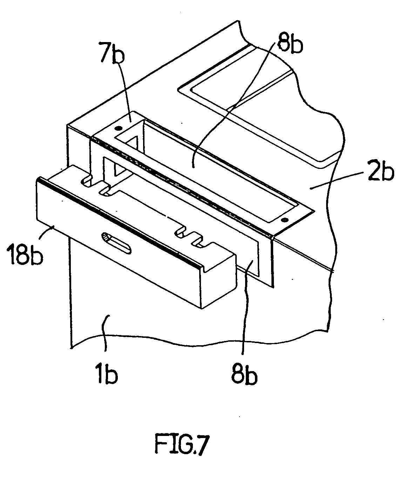

Eine in Fig. 6 gezeigte Kartonverpackung für den Zähler- und Verteilerschrank kann eine durch einen Schnitt 23 gebildete Klappe 24 aufweisen, welche zu der Einsenkung 8a ausgerichtet ist, so dass sie in diese einklappen kann. Vorteilhaft lässt sich so auch im verpackten Zustand ein Griff bilden, der den Transport und die Handhabung des verpackten Schranks erleichtert.

Ein in Fig. 7 gezeigter Zähler- und Verteilerschrank weist ein Einsatzstück 7b mit Einsenkungen 8b und 8b' an den beiden zur Schrankaußenwand offenen Seiten auf. Vorteilhaft lassen sich diese Einsenkungen zur Verbindung sowohl nebeneinander als auch übereinander angeordneter Zähler- und Verteilerschränke nutzen.

## Patentansprüche

1. Zähler- und/oder Verteilerschrank,
**gekennzeichnet durch** Wandaussparungen (6) an zur Rückwand (1) senkrechten Schrankecken und die Wandaussparungen (6) ausfüllende Einsatzstücke (7).

2. Zähler- und/oder Verteilerschrank nach Anspruch 1,
**dadurch gekennzeichnet,**
**dass** sich die Wandaussparungen (6) über einen Teil der Länge der Eckenkanten erstrecken.

3. Zähler- und/oder Verteilerschrank nach Anspruch 1 oder 2,
**dadurch gekennzeichnet,**
**dass** die die Aussparungen (6) aufweisende Schrankwand (2-5) aus Blech und die Einsatzstücke (7) aus Kunststoff bestehen.

4. Zähler- und/oder Verteilerschrank nach einem der Ansprüche 1 bis 3,
**dadurch gekennzeichnet,**
**dass** sich die Aussparungen (6) von der Eckenkante in beide der zueinander senkrecht stehenden Korpuswände (2-5) hinein erstrecken.

5. Zähler- und/oder Verteilerschrank nach einem der Ansprüche 1 bis 4,
**dadurch gekennzeichnet,**
**dass** die Außenkontur der Einsatzstücke (7) die Form eines länglichen Quaders aufweist, dessen Längsachse parallel zur Eckenkante angeordnet ist.

6. Zähler- und/oder Verteilerschrank nach einem der Ansprüche 1 bis 5,
**dadurch gekennzeichnet,**
**dass** die Einsatzstücke (7) zur Schrankwandaußenfläche bündig sind oder/und über die Schrankwandaußenfläche hinaus vorstehen.

7. Zähler- und/oder Verteilerschrank nach einem der Ansprüche 1 bis 6,
**dadurch gekennzeichnet,**
**dass** die Einsatzstücke (7) eine als Griff nutzbare Einsenkung (8) aufweisen.

8. Zähler- und/oder Verteilerschrank nach einem der Ansprüche 1 bis 7,
**dadurch gekennzeichnet,**
**dass** die Einsatzstücke (7) Einrichtungen (8a) für die Verbindung mit einem Teil des Schrankes oder/und einem am Schrank außen anzubringenden Teil (14) aufweisen.

9. Zähler- und/oder Verteilerschrank nach Anspruch 8,
**dadurch gekennzeichnet,**
**dass** die Einsatzstücke Einrichtungen für die Verbindung mit einem an der Schrankvorderseite angebrachten Blendrahmen und/oder mit einer Schranktür aufweisen.

10. Zähler- und/oder Verteilerschrank nach Anspruch 8 oder 9,
**dadurch gekennzeichnet,**
**dass** die Einsatzstücke (7a) Einrichtungen (8a) zur Anbringung eines Kabelkanals (14) außen am Schrank aufweisen.

11. Zähler- und/oder Verteilerschrank nach einem der Ansprüche 8 bis 10,
**dadurch gekennzeichnet,**
**dass** die Einsatzstücke (7a) eine Einsenkung für die Aufnahme eines, ggf. in der Einsenkung (8a) einrastenden, Steckverbindungselements (13) aufweisen.

12. Zähler- und/oder Verteilerschrank nach Anspruch 11,
**dadurch gekennzeichnet,**
**dass** das Steckverbindungselement ein blockartiges Verbindungsstück (13) ist.
